# EUROPÄISCHE PATENTSCHRIFT

(11) **EP 1 015 774 B1**
(45) Veröffentlichungstag und Bekanntmachung des Hinweises auf die Patenterteilung: **27.07.2005**
(21) Anmeldenummer: 98951445.0
(22) Anmeldetag: 21.09.1998
(51) Int. Cl.: F16B 5/02

(54) **Befestigung von Latten aus Holz auf einem u.a. aus Holz bestehenden Dach- oder Wandunterbau**
Fixation of wooden laths on a roof substructure or a wall foundation made i.a. of wood
Fixation des lattes de bois sur le platelage d'un toit ou la fondation d'un mur composé entre autres de bois

(30) Priorität: 22.09.1997 DE 19741734; 30.03.1998 DE 29805784 U
(43) Veröffentlichungstag der Anmeldung: 05.07.2000
(73) Patentinhaber: SFS intec Holding AG, 9435 Heerbrugg (CH)
(72) Erfinder: MATTLE, Paul, CH-9443 Widnau (CH); THURNHERR, Ernst, CH-9444 Diepoldsau (CH)
(86) Internationale Anmeldenummer: PCT/EP1998/006016
(87) Internationale Veröffentlichungsnummer: WO 1999/015796

(56) Entgegenhaltungen:
- EP-A- 0 129 404
- EP-A- 0 528 450
- WO-A-91/03609
- DE-U- 8 804 654
- DE-U- 9 105 683
- DE-U- 29 607 265
- GB-A- 2 130 327
- GB-A- 2 251 666
- US-A- 2 292 557

## Beschreibung

Die Erfindung betrifft eine Befestigung von Latten aus Holz auf einem u.a. aus Holz bestehenden Dach- oder Wandunterbau mit einer Schraube mit einem zumindest teilweise mit einem Gewinde versehenen Schaft, einer Bohr- und/oder Eindringspitze und einem mit einem Werkzeugangriff ausgestatteten Kopf, wobei am Schaft der Schraube zumindest an die Bohr- und/oder Eindringspitze und an den Kopf anschließend jeweils ein Gewindeabschnitt vorgesehen ist und diese beiden Gewindeabschnitte den gleichen Außendurchmesser (DA) aufweisen.

Bisher werden Latten, insbesondere Dachlatten, normalerweise durch Nägel befestigt, welche jedoch in Schaftrichtung nicht oder nur wenig auf Zug belastet werden dürfen. Wenn durch den Nagelvorgang, vor allem bei größeren Nägeln, keine Spaltbildung resultieren soll, muß vorgebohrt werden.

Gerade bei der Befestigung von Latten, auf welchen dann schlußendlich die eigentliche Dacheindekung oder eine Wandverkleidung befestigt wird, ist in der Regel die Dach- oder die Wandkonstruktion der Schwachpunkt, weil bei Sogeinwirkung entstehende Zugkräfte nicht übertragen werden können.

Der Einsatz von Schrauben wurde wohl deshalb nie in Betracht gezogen, weil beim Anziehen der Schrauben durch den Schraubenkopf bei den doch relativ schmalen Latten die Gefahr der Spaltbildung besteht.

Bei einer bekannten Befestigung (DE-U-8 804 654) wird eine Schraube eingesetzt, welche zwei Gewindeabschnitte hat, welche die gleiche Gewindesteigung aufweisen. Bei dieser Schraube ist ein Schraubenkopf mit bei Senkschrauben bisher üblicher Grösse (Durchmesser) vorgesehen, wobei zur Erleichterung des Ansenkens an der Oberfläche der zu befestigenden Holzteile an der Unterseite des Schraubenkopfes eine Art Fräsrippen vorhanden sind. Die Wirksamkeit solcher Fräsrippen ist zweifelhaft, da hier ja nur Zeit im Bereich einer einzigen Schraubenumdrehung bleibt, um die Ansenkung herzustellen. Schliesslich muss der Kopf der Vorschubgrösse der Gewindesteigung folgen. Ein Versenken des Kopfes kann ferner wohl nur so weit gehen, bis die Oberseite des Schraubenkopfes bündig mit der Oberfläche des zu befestigenden Holzteiles bündig abschliesst.

Bei einer weiteren bekannten Befestigung (GB-A-2 251 666) ist eine Schraube mit zwei Gewindeabschnitten mit gleichem Aussendurchmesser, jedoch verschiedener Gewindesteigung vorgesehen. Wenn eine grössere Gewindesteigung am kopfnahen Gewindeabschnitt vorgesehen ist, dann kann eine solche Schraube nicht zur gegenseitigen Befestigung von Holzelementen eingesetzt werden. Die miteinander zu befestigenden Teile würden nämlich auseinandergedrückt anstatt zusammengezogen und somit zusammengepressst. Eine solche Anordnung ist eben nur bei der Anwendung nach der Entgegenhaltung denkbar, wenn also zwischen Kopf und diesem ersten Gewindeabschnitt ein gewindefreier Schaftabschnitt vorhanden ist, in welchen schliesslich die zu befestigenden Abdeckplatten mit ihrer ganzen Dicke aufgenommen werden. Eine solche Konstruktion einer Schraube ist aber für einen Einsatz, bei dem im gesetzten Zustand beide Gewindeabschnitte im Eingriff sind, nicht geeignet.

Die vorliegende Erfindung hat sich zur Aufgabe gestellt, eine Befestigung der eingangs genannten Art zu schaffen, und zwar für einen ganz speziell für die Befestigung von Latten aus Holz an einem u. a. aus Holz bestehenden Dach- oder Wandunterbau optimierten Einsatz.

Erfindungsgemäß gelingt dies dadurch, daß die Latten aus Holz stark angepresst anliegend auf dem aus Holz bestehenden Dach- oder Wandunterbau befestigt sind, dass der an den Kopf anschliessende Gewindeabschnitt eine Gewindesteigung aufweist, welche kleiner ist als die Gewindesteigung des an die Bohr- und/oder Eindringspitze anschliessenden Gewindeabschnittes, und dass der Kopf klein und einsenkbar ausgeführt ist, wobei der Außendurchmesser des Kopfes gleich groß oder geringfügig größer ist als der Außendurchmesser (DA) der Gewindeabschnitte.

Durch die erfindungsgemässen Massnahmen kann eine Belastung sowohl auf Druck (z.B. bei großen Schneelasten) als auch auf Zug (bei Sogeinwirkungen) aufgenommen werden. Damit ist ein dauemder Verbund sowohl auf Druck als auch auf Zug gewährleistet. Bei einer solchen Befestigung kommt es nicht darauf an, eine Latte in einem bestimmten Abstand von einem Unterbau zu halten, da solche Latten praktisch immer auf gleichartigem Material aus Holz, z.B. einer Kreuzlattung mit Täferung auf Sparren, aufliegen, oder aber mit dem darunter liegenden Holzbalken od. dgl., gegebenenfalls unter Zwischenschaltung einer Dampfsperre, verschraubt werden.

Gerade bei solchen Latten ist ein gegenseitig starkes Anpressen zwischen Latte und Unterbau vorteilhaft, weil das Gewinde der Schraube sowohl im Unterbau als auch im Bereich der Latte im Eingriff steht. Durch das Anpressen der Latte am Unterbau können kleinere, von der Luftfeuchtigkeit abhängige Größenänderungen im Bereich der Latte und ebenfalls im Bereich des Unterbaues abgefangen werden.

Da der Außendurchmesser des Kopfes gleich groß oder eben nur geringfügig größer ist als der Außendurchmesser der Gewindeabschnitte, wird nur noch ein sehr kleiner Kopf in das Material der Latte eingesenkt, was die Spaltwirkung ebenfalls verhindert. Trotzdem wird die verschraubte Latte sicher auf Zug belastbar, da unterhalb des Schraubenkopfes ein Gewindeabschnitt als Stützgewinde vorhanden ist.

Schon aus Fertigungsgründen ist es vorteilhaft, wenn die beiden Gewindeabschnitte zumindest annähernd die gleiche Länge aufweisen. Für die Übertragung der Zug- und Druckkräfte genügen relativ kurze Gewindeabschnitte, welche gerade bei besonders langen Schrauben einfacher hergestellt werden können.

Bei speziell langen Schrauben ist es von Vorteil, wenn die Länge der Gewindeabschnitte bei unterschiedlicher Gesamtlänge der Schraube konstant ist und sich die Länge des gegebenenfalls gewindefreien Schaftabschnittes ändert. Die besondere Länge der Gewindeabschnitte nahe den beiden Enden der Schraube reicht für die Übertragung der Druck- und Zugkräfte völlig aus, so daß diese auch bei sehr langen Schrauben nicht verlängert werden muß. Damit ist auch eine Vereinfachung bei der Herstellung verschieden langer Schrauben gegeben, zumal die Gewindeabschnitte unabhängig von der Schraubenlänge immer die gleiche Länge aufweisen.

Vorteilhaft wirkt sich ferner aus, daß der Flankenwinkel der Gewindeabschnitte annähernd 40° und die Gewindesteigung zumindest annähernd 3 mm beträgt. Der Eindrehvorgang kann somit durch die große Gewindesteigung ziemlich rasch erfolgen. Durch das relativ spitz ausgeführte Gewinde erfolgt eine Einschneidwirkung im Bereich der Dachlatte, womit die Gefahr des Spaltens noch weit weniger gegeben ist.

Eine besonders vorteilhafte Ausgestaltung sieht vor, daß der Durchmesser des gewindefreien Schaftabschnittes vom Ausgangsdrahtmaterial auf den Kemdurchmesser der Gewindeabschnitte reduziert ist. Speziell durch eine solche Reduktion des Schaftabschnittes kann erreicht werden, daß der Durchmesser des Schaftabschnittes schlußendlich dem Kemdurchmesser der Gewindeabschnitte entspricht und somit die Möglichkeiten der Drehmomentreduktion beim Eindrehen der Schraube voll ausgenützt werden können.

In diesem Zusammenhang ist auch eine andere Fertigungsmöglichkeit gegeben, welche inetwa zum gleichen Endresultat führt. Dazu wird vorgeschlagen, daß die Bereiche der Gewindeabschnitte des Schaftes vor der Gewindeherstellung auf einen gegenüber dem Ausgangsdrahtmaterial größeren Durchmesser gestaucht sind, so daß der Kemdurchmesser der Gewindeabschnitte nach dem Gewindewalzen wiederum dem Durchmesser des gewindefreien Schaftabschnittes entspricht. Somit ist die umgekehrte Vorgangsweise ebenfalls möglich, indem nämlich ein gewindefreier Schaftabschnitt mit einem im wesentlichen dem Kemdurchmesser der Gewindeabschnitte entsprechenden Durchmesser geschaffen wird.

Vorteilhaft ist es bei Schrauben bis zu einer gewissen Länge, wenn die Länge der Gewindeabschnitte und die Länge des gegebenenfalls gewindefreien oder mit einem weiteren Gewinde versehenen Schaftabschnittes etwa einem Drittel der gesamten Länge der Schraube entsprechen.

Weitere erfindungsgemäße Merkmale und besondere Vorteile werden in der nachstehenden Beschreibung anhand der Zeichnungen noch näher erläutert. Es zeigen:
- Fig. 1: eine Ansicht einer bei der erfindungsgemäßen Befestigung eingesetzten Schraube;
- Fig. 2: eine Anwendungsmöglichkeit einer Schraube zur Befestigung von Dachlatten aus Holz auf einem u.a. Holzbalken aufweisenden Dachunterbau;
- Fig. 3: eine weitere Anwendungsmöglichkeit einer Schraube zur Befestigung von Latten aus Holz an einem u.a. Holz aufweisenden Wandunterbau;
- Fig. 4: bis 7 verschiedene weitere Anwendungsmöglichkeiten einer Schraube zur Befestigung von Dachlatten aus Holz auf einem u.a. Holzbalken aufweisenden Dachunterbau.

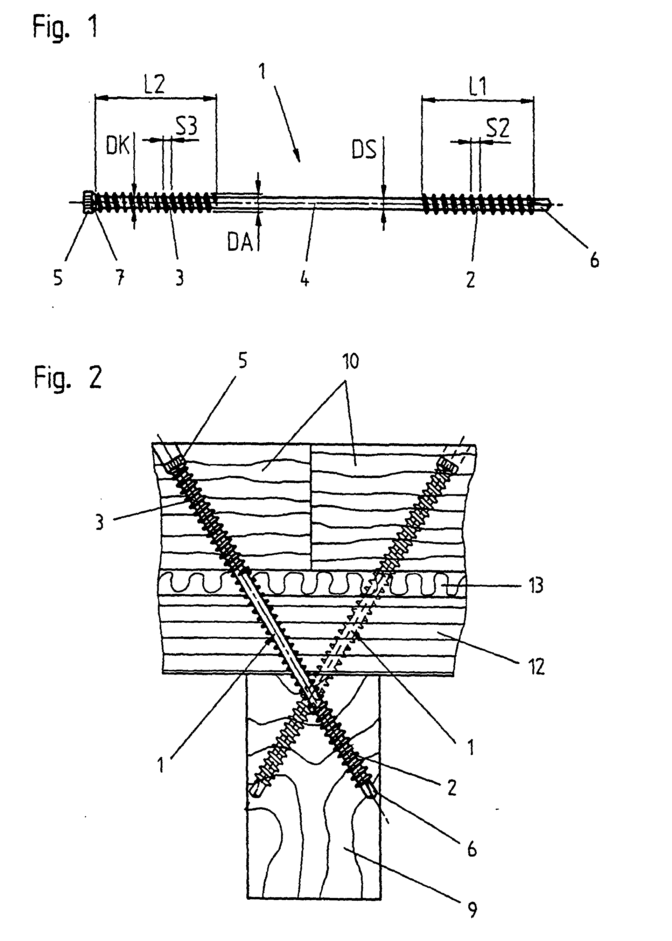

Die in Fig. 1 dargestellte Schraube 1 ist mit einem zumindest teilweise mit einem Gewinde versehenen Schaft ausgebildet, welcher eine Bohrspitze 6 aufweist und mit einem mit einem Werkzeugangriff ausgestatteten Kopf 5 versehen ist. Der Werkzeugangriff ist vorteilhafterweise als Innenangriff ausgebildet, weil der Kopf bei dem bestimmungsgemäßen Einsatz entsprechend versenkt werden soll. Deshalb sind große Werkzeuge oder Werkzeuge mit entsprechendem Durchmesser nicht sinnvoll, und auch ein Außenangriff ist speziell für eine solche Anwendungsvariante kaum denkbar. Die Schraube 1 dient z.B. bei der Anwendung nach Fig. 2 zur Befestigung von Latten 10 auf einem u.a. Holzbalken 9 aufweisenden Dachunterbau. Auf diesen Holzbalken 9 können eine Täferung bzw. Verschalung 12, gegebenenfalls eine Dampfsperre und/oder eine Isolationsschicht 13 und gegebenenfalls zusätzliche Schichten aus Holz oder aber aus einem festen Isoliermaterial aufgebracht sein.

Am Schaft der Schraube 1 ist an die Bohrspitze 6 anschließend ein Gewindeabschnitt 2 vorgesehen und an den Kopf 5 anschließend ein Gewindeabschnitt 3. Beide Gewindeabschnitte 2, 3 weisen den gleichen Außendurchmesser DA auf, jedoch verschiedene Gewindesteigung. Der zwischen den beiden Gewindeabschnitten 2, 3 liegende Schaftabschnitt 4 ist bei der gezeigten Ausführungsvariante gewindefrei ausgeführt, wobei dieser gewindefreie Schaftabschnitt 4 einen Durchmesser DS aufweist, welcher annähernd dem Kemdurchmesser DK der beiden Gewindeabschnitte 2, 3 entspricht. Es kann also praktisch durchgehend ein gleichbleibender Durchmesser des vollen Materials gegeben sein, wobei über diesen Durchmesser DS bzw. DK hinaus lediglich die Gewindegänge der Gewindeabschnitte 2 und 3 vorstehen. Der Gewindeabschnitt 2 weist eine Länge L1 auf und der Gewindeabschnitt 3 eine Länge L2. Vorteilhaft weisen beide Gewindeabschnitte die gleiche Länge L1 bzw. L2 auf. Auf das Einformverhalten der Schraube in die Holzteile wirkt sich das relativ große Verhältnis des Kerndurchmessers DK zum Außendurchmesser DA der Gewindeabschnitte 2, 3 besonders vorteilhaft aus. Dieses Verhältnis ist annähernd 1 : 1,5 bis 1 : 2, vorzugsweise jedoch 1 : 1,7. Bei einer ganz konkreten Ausführung - welche jedoch nur ein spezielles Beispiel darstellt - beträgt der Kemdurchmesser DK 4 mm und der Außendurchmesser DA 6,5 mm. Für ein gutes Eindringen der Gewindebereiche in den Holzwerkstoff ist es ebenfalls vorteilhaft, bei den Gewindeabschnitten 2 und 3 einen entsprechenden Flankenwinkel vorzusehen, welcher zweckmäßig annähernd 40° beträgt. Der gleiche Flankenwinkel ist dann vorteilhaft auch bei einem gegebenenfalls auf dem Schaftabschnitt 4 zusätzlich ausgebildeten Gewinde vorgesehen. Die Gewindesteigung beträgt bei einer solch ganz speziellen Konstruktion zumindest annähernd 3 mm.

Eine Maßnahme ist gerade bei der vorliegenden Erfindung von besonderer Bedeutung. Durch die unterschiedliche Gewindesteigung der beiden Gewindeabschnitte 2 und 3 wird erreicht, daß die Latte 10 beim Eindrehen an den Unterbau angepreßt wird. Das Gewinde des Gewindeabschnittes 3 weist eine Steigung S3 auf, welche kleiner ist als die Gewindesteigung S2 des Gewindeabschnittes 2. Der Unterschied der Gewindesteigung ist jedoch relativ gering, da lediglich im fertig gesetzten Zustand ein entsprechender Anpreßdruck zwischen der Latte 10 und dem gesamten Unterbau erzielt werden soll. Sobald der Gewindeabschnitt 3 beim Eindrehen der Schraube 1 in Eingriff mit der Latte 10 kommt, wird dieser um das Maß der gesamten unterschiedlichen Gewindesteigung in Richtung zum Unterbau, im vorliegenden Falle zum Balken 9, hin gezogen und somit entsprechend angepreßt.

Der wesentliche Vorteil der Verwendung von Schrauben gegenüber von Nägeln bei einem solchen Einsatzfall liegt darin, daß Schrauben in deren Achsrichtung gesichert in den entsprechenden Teilen, d.h. sowohl in den Latten 10 als auch in dem Holzbalken 9 verriegelt sind. Selbst bei extremen Belastungen durch Sogeinwirkung oder durch Schneelasten kann es deshalb nicht vorkommen, daß der Kopf 5 an die Oberfläche der Latte 10 wandert, oder daß in irgendeiner Weise eine axiale Verschiebung der Latte an dem Schaft der Schraube 1 stattfindet.

Im kopfnahen Bereich des Gewindeabschnittes 3 ist eine konisch verlaufende Erweiterung 7 vorgesehen, welche in den Außendurchmesser des Kopfes 5 übergeführt ist. Diesfalls geht der Kemdurchmesser DK im kopfnahen Bereich des Gewindeabschnittes 3 teilweise noch im Bereich des Gewindeabschnittes 3 in eine Erweiterung mit größerem Durchmesser über. Der Kopf 5 weist einen Außendurchmesser auf, welcher gleich groß oder nur geringfügig größer ist als der Außendurchmesser DA der Gewindeabschnitte 2 und 3, wodurch die Spaltwirkung beim Einschrauben in eine Latte praktisch aufgehoben wird.

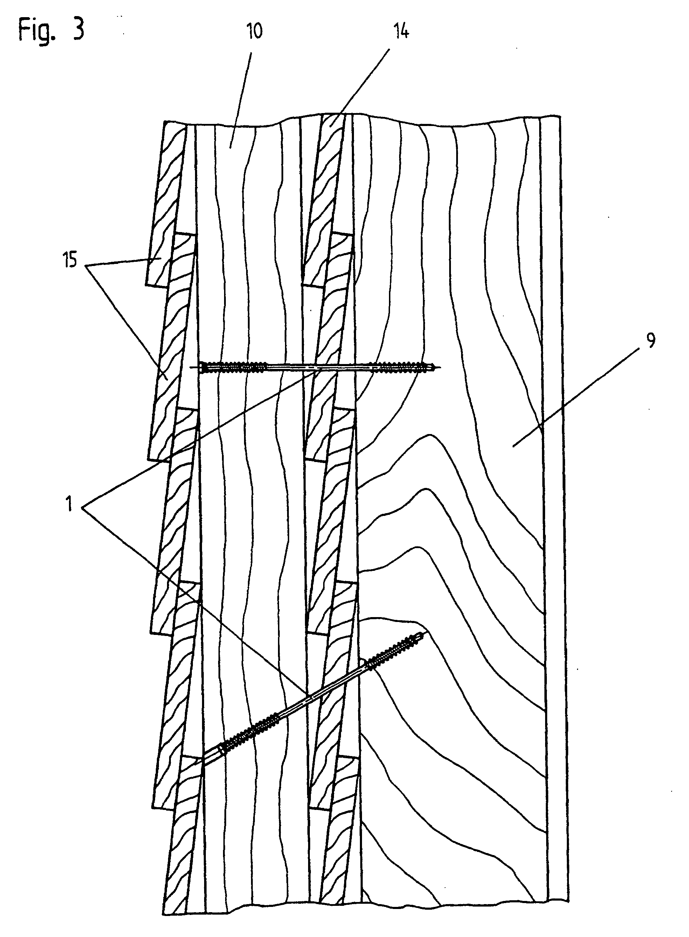

Wenn Schrauben, wie sie z.B. bei den Einsatzbeispielen gemäß den Fig. 2 und 3 gezeigt sind, bis zu einer gewissen Länge eingesetzt werden, ist die Länge des Schaftabschnittes 4 nur geringfügig größer als die Länge L1 bzw. L2 der Gewindeabschnitte 2 bzw. 3, so daß die Abschnitte L1 und L2 und der dazwischen liegende Schaftabschnitt 4 z.B. je einen Drittel der gesamten Länge der Schraube ausmachen. Es ist aber auch durchaus möglich, die Längen L1 und L2 der Gewindeabschnitte 2 und 3 auch bei unterschiedlicher Gesamtlänge der Schraube immer konstant groß zu lassen, so daß sich nur die Länge des Schaftabschnittes 4 ändert. Dadurch kann erreicht werden, daß das Drehmoment auch bei relativ langen Schrauben und einem somit notwendigen tiefen Eindrehen in Holz nicht wesentlich überhöht wird.

Die Schrauben 1 können im wesentlichen in der Längsmittelebene der Latten 10 liegend eingeschraubt werden, d.h. sie stehen in bezug auf die Holzbalken 9 rechtwinklig zu diesen ausgerichtet. Es ist aber auch möglich - wie in den Fig. 2 und 3 dargestellt - die Schrauben 1 spitzwinklig zu dieser gedachten Längsmittelebene oder aber in dieser Längsmittelebene liegend, jedoch spitzwinklig zur Oberseite der Latte 10 geneigt, einzudrehen. Vorstellbar ist es auch, daß sich die aufeinander folgend eingedrehten Schrauben 1 bezogen auf eine solche Längsmittelebene der Latte 10 nach entgegengesetzten Richtungen spitzwinklig neigen.

Fig. 2 zeigt einen Spezialfall, wobei sich eine solche Anwendung besonders vorteilhaft mit der erfindungsgemäßen Schraube lösen läßt. Dort werden zwei mit ihren Enden aneinander stoßende Latten 10 an einem Holzbalken 9 befestigt. Dabei können die Enden der Latten 10 durch die schräg eingedrehten Schrauben 1 sicher mit dem Holzbalken 9 verbunden werden. Durch das schräge Eindrehen und die besondere Konstruktion der Schraube einschließlich der Ausbildung des Gewindes und einschließlich der Ausbildung des Schraubenkopfes kann verhindert werden, daß sich die Latten 10 spalten.

In Fig. 3 ist ein weiteres Ausführungsbeispiel gezeigt. Auf einem gegebenenfalls auch von Holzbalken 9 gebildeten Unterbau sind Verkleidungselemente 14 aufgebracht. Wenn nun eine mit Verkleidungselementen 14 versehene Fassade renoviert werden soll, können mittels erfindungsgemäßer Schrauben 1 Latten 10 an dem darunter liegenden Holzbalken 9 befestigt werden, ohne daß die bereits vorhandenen Verkleidungselemente 14 entfernt werden müssen. Aufgrund der montierten Latten 10 können die neuen Verkleidungselemente 15 an den Latten 10 fixiert werden. Gerade bei einer solchen Anwendung ist es wieder von besonderem Vorteil, wenn die Latte 10 in gewissem Maße an den Unterbau samt den alten Verkleidungselementen 14 angepreßt wird.

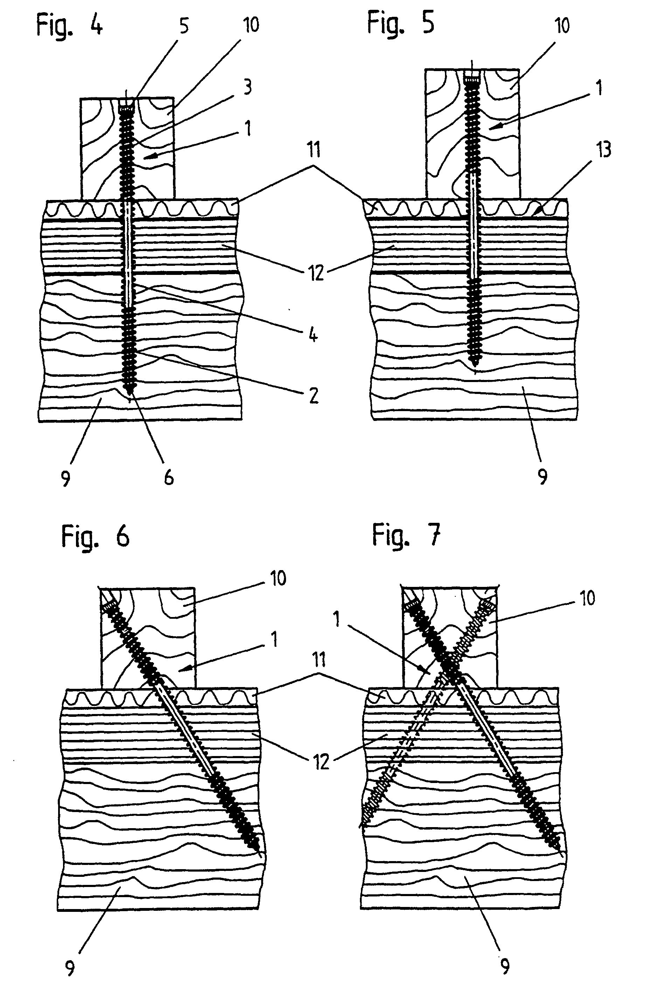

Wie aus den Anwendungsbeispielen nach den Fig. 4 bis 7 ersichtlich ist, dient die Schraube 1 ebenfalls zur Befestigung von Dachlatten 10 auf einem u.a. Holzbalken 9 aufweisenden Dachunterbau. Auf diesen Holzbalken 9 können eine Täferung bzw. Verschalung 12, gegebenenfalls eine Dampfsperre 13 und eine zusätzliche Schicht 11 aus Holz oder aber aus einem festen Isoliermaterial aufgebracht sein. Für ein gutes Eindringen der Gewindebereiche in den Holzwerkstoff ist es vorteilhaft, bei den Gewindeabschnitten 2 und 3 einen entsprechenden Flankenwinkel vorzusehen, welcher zweckmäßig annähernd 40° beträgt. Der gleiche Flankenwinkel ist dann vorteilhaft auch bei einem auf dem Schaftabschnitt 4 ausgebildeten Gewinde vorgesehen. Die Gewindesteigung beträgt bei einer solch ganz speziellen Konstruktion zumindest annähernd 3 mm. Bei einer Schraube, wie sie hier eingesetzt wird, müssen bereits bei der Fertigung verschiedene Maßnahmen ergriffen werden, um überhaupt auf eine Lösung zu kommen, bei der der Durchmesser DS des Schaftabschnittes 4 annähernd gleich dem Kemdurchmesser DK der Gewindeabschnitte 2 und 3 ist. Eine Möglichkeit sieht vor, daß der gewindefreie Schaftabschnitt 4 vom Ausgangsdrahtmaterial auf den Kerndurchmesser DK der Gewindeabschnitte 2 bzw. 3 reduziert ist. Die andere Variante sieht eine umgekehrte Vorgangsweise vor. Somit ist es also auch möglich, die Bereiche des Schaftes, welche schlußendlich die Gewindeabschnitte 2 und 3 bilden sollen, vor der Gewindeherstellung auf einen gegenüber dem Ausgangsdrahtmaterial größeren Durchmesser gestaucht werden. Anschließend wird auf diesen Abschnitten das Gewinde gewalzt, um die Gewindeabschnitte 2 und 3 herzustellen. Dann ergibt sich ein Kemdurchmesser DK, welcher wiederum dem Durchmesser des gewindefreien Schaftabschnittes 4 entspricht.

Wenn Schrauben, wie sie beispielsweise bei den Einsatzbeispielen in den Fig. 4 bis 7 gezeigt sind, bis zu einer gewissen Länge eingesetzt werden, können die Länge L1 bzw. L2 der Gewindeabschnitte 2 bzw. 3 und die Länge des Schaftabschnittes 4 jeweils etwa gleich groß ausgeführt sein, so daß die Abschnitte L1 und L2 und der dazwischen liegende Schaftabschnitt 4 je einen Drittel der gesamten Länge der Schraube ausmachen. Es ist aber auch durchaus möglich, die Längen L1 und L2 der Gewindeabschnitte 2 und 3 auch bei unterschiedlicher Gesamtlänge der Schraube immer konstant groß zu lassen, so daß sich also nur die Länge des Schaftabschnittes 4 ändert. Dadurch kann erreicht werden, daß das Drehmoment auch bei relativ langen Schrauben und einem somit notwendigen tiefen Eindrehen in Holz nicht wesentlich überhöht wird.

Bei den Einsatzbeispielen nach den Fig. 4 und 5 werden die Schrauben 1 im wesentlichen in der Längsmittelebene der Dachlatten 10 liegend eingeschraubt, d.h. sie stehen in bezug auf die Holzbalken 9 rechtwinklig zu diesen ausgerichtet. Es ist aber auch möglich, die Schrauben 1 spitzwinklig zu dieser gedachten Mittellängsebene der Dachlatten 10 einzudrehen, und zwar immer nur in der in Fig. 6 dargestellten Neigung, also entgegen der Dachneigung. Wie dem Einsatzbeispiel in Fig. 7 entnommen werden kann, ist es ebenfalls denkbar, daß sich die aufeinander folgend eingedrehten Schrauben 1 bezogen auf eine solche Mittellängsebene der Dachlatte 10 nach entgegengesetzten Richtungen spitzwinklig neigen.

In der vorstehenden Beschreibung wird davon ausgegangen, daß der Schaftabschnitt 4 gewindefrei ausgeführt ist. Es ist jedoch auch denkbar, neben den Gewindeabschnitten 2 und 3 auch im Bereich des Schaftabschnittes 4 ein entsprechendes Gewinde vorzusehen, so daß also auf dem ganzen Schaft der Schraube 1 ein durchgehendes Gewinde vorhanden ist. Eine solche Konstruktion einer Schraube ist sinnvollerweise dort einzusetzen, wo allein schon aufgrund der Art des verwendeten Holzes keine Gefahr eines Überdrehens der Schraube beim Setzen besteht. Auf jeden Fall wird bei einer solchen Konstruktion das Drehmoment beim Eindrehen der Schraube wesentlich erhöht.

Eine besondere Ausgestaltung, bei der wohl ein durchgehendes Gewinde vorhanden ist, das Drehmoment jedoch nicht übermäßig stark erhöht wird, ist dann möglich, wenn auf dem Schaftabschnitt 4 ein gegenüber dem Außendurchmesser DA in den Gewindeabschnitten 2 und 3 reduziertes Gewinde vorgesehen ist, welches einen kleineren Außendurchmesser aufweist. Natürlich ist diesfalls dann auch das Gewinde selbst im Querschnitt kleiner, da trotz des reduzierten Gewindeaußendurchmessers ein Flankenwinkel von annähernd 40° beibehalten werden kann. Der Eingriff des Gewindes im Bereich des Schaftabschnittes 4 ist somit kaum gegeben, und es ergeben sich daher durch das Gewinde in diesem Schaftabschnitt 4 auch keine höheren Belastungen auf das Drehmoment beim Setzen der Schraube. Wichtig ist dabei jedoch, daß trotzdem eine durchgehend gleichbleibende Gewindesteigung vorhanden ist.

Bei der erfindungsgemäßen Schraube 1 ist ein Werkzeugangriff in Form eines Innenangriffes vorgesehen. Je nach Ausbildung des Kopfes 5 der Schraube 1 sind hier natürlich verschiedene Möglichkeiten für einen Werkzeugangriff gegeben.

Im Rahmen der Erfindung ist es auch möglich, auf dem Schaftabschnitt 4 ein nur über einen Teil der Länge desselben geführtes Gewinde, ein entsprechend reduziertes Gewinde oder aber jeweils mit Abstand voneinander solche Gewindebereiche bzw. reduzierte Gewindebereiche vorzusehen. Denkbar wäre es auch, im Bereich des Schaftabschnittes 4 Rillen oder Einkerbungen vorzusehen, durch welche Bearbeitung schlußendlich eine Reduzierung des Durchmessers des Schaftabschnittes 4 erreicht werden kann.

Bei allen Ausführungsvarianten der Schrauben 1 wird von einer Bohrspitze 6 gesprochen, durch welche beim Eindrehen der Schraube die Holzfasern zumindest teilweise abgetrennt und die Spaltgefahr gerade beim Ansetzen der Schraube auf einer Latte besonders gut verhindert wird. Natürlich ist es aber auch möglich, hier - wie auch aus den Beispielen nach den Fig. 4 bis 7 ersichtlich - eine Eindringspitze vorzusehen.

Mit einer erfindungsgemäßen Schraube können nicht nur Holzlatten auf einem Unterbau befestigt werden, sondern grundsätzlich Latten, Platten, Wand- und Dachelemente an einem Untergrund, wobei sowohl der Oberbau als auch der Unterbau aus Holz, Holzwerkstoffen oder holzähnlichen Werkstoffen bestehen kann.

## Patentansprüche

1. Befestigung von Latten aus Holz auf einem u.a. aus Holz bestehenden Dach- oder Wandunterbau mit einer Schraube mit einem zumindest teilweise mit einem Gewinde versehenen Schaft, einer Bohr- und/oder Eindringspitze (6) und einem mit einem Werkzeugangriff ausgestatteten Kopf (5), wobei am Schaft der Schraube (1) zumindest an die Bohr- und/oder Eindringspitze (6) und an den Kopf (5) anschließend jeweils ein Gewindeabschnitt (2, 3) vorgesehen ist und diese beiden Gewindeabschnitte (2, 3) den gleichen Außendurchmesser (DA) aufweisen, **dadurch gekennzeichnet, dass** die Latten aus Holz stark angepresst anliegend auf dem aus Holz bestehenden Dach- oder Wandunterbau befestigt sind, dass der an den Kopf (5) anschliessende Gewindeabschnitt (3) eine Gewindesteigung (S3) aufweist, welche kleiner ist als die Gewindesteigung (S2) des an die Bohr- und/oder Eindringspitze (6) anschliessenden Gewindeabschnittes, und dass der Kopf (5) klein und einsenkbar ausgeführt ist, wobei der Außendurchmesser des Kopfes (5) gleich groß oder geringfügig größer ist als der Außendurchmesser (DA) der Gewindeabschnitte (2, 3).

2. Befestigung nach Anspruch 1, **dadurch gekennzeichnet, daß** die beiden Gewindeabschnitte (2, 3) zumindest annähernd die gleiche Länge (L1, L2) aufweisen.

3. Befestigung nach Anspruch 1, **dadurch gekennzeichnet, daß** die Länge (L1, L2) der Gewindeabschnitte (2, 3) bei unterschiedlicher Gesamtlänge der Schraube (1) konstant ist und sich die Länge des gegebenenfalls gewindefreien Schaftabschnittes (4) ändert.

4. Befestigung nach einem der Ansprüche 1 bis 3, **dadurch gekennzeichnet, daß** der Flankenwinkel der Gewindeabschnitte (2, 3) annähernd 40° und die Gewindesteigung zumindest annähernd 3 mm beträgt.

5. Befestigung nach einem der Ansprüche 1 bis 4, **dadurch gekennzeichnet, daß** der Durchmesser (DS) des gewindefreien Schaftabschnittes (4) vom Ausgangsdrahtmaterial auf den Kemdurchmesser (DK) der Gewindeabschnitte (2, 3) reduziert ist.

6. Befestigung nach einem der Ansprüche 1 bis 5, **dadurch gekennzeichnet, daß** die Bereiche der Gewindeabschnitte (2; 3) des Schaftes vor der Gewindeherstellung auf einen gegenüber dem Ausgangsdrahtmaterial größeren Durchmesser gestaucht sind, so daß der Kemdurchmesser (DK) der Gewindeabschnitte (2, 3) nach dem Gewindewalzen wiederum dem Durchmesser (DS) des gewindefreien Schaftabschnittes (4) entspricht.

7. Befestigung nach Anspruch 1 und einem der vorhergehenden Ansprüche, **dadurch gekennzeichnet, daß** die Länge der Gewindeabschnitte (2, 3) und die Länge des gewindefreien Schaftabschnittes (4) etwa jeweils einem Drittel der gesamten Länge der Schraube (1) entsprechen.

## Claims

1. Fastening of wooden battens to a roof or wall substructure consisting inter alia of wood, with a screw having a shank, a drilling and/or penetrating tip (6) provided at least partly with a screw-thread, and a head (5) provided with at tool-engagement portion, wherein a respective threaded portion (2,3) is provided on the shank of the screw (1) at least adjacent the drilling and/or penetrating tip (6) and these two threaded portions (2,3) have the same outer diameter (DA), **characterised in that** the wooden battens are fastened to the roof or wall substructure consisting of wood so as to adjoin the latter under firm contact pressure, **in that** the threaded portion (3) adjacent the head (5) has a thread pitch (S3) which is smaller than the thread pitch (S2) of the threaded portion adjacent the drilling and/or penetrating tip (6), and **in that** the head (5) is designed to be small and able to be countersunk, wherein the outer diameter of the head (5) is of the same size or slightly larger than the outer diameter (DA) of the threaded portions (2,3).

2. A fastening according to Claim 1, **characterised in that** the two threaded portions (2,3) are at least approximately the same length (L1,L2).

3. A fastening according to Claim 1, **characterised in that** the length (L1,L2) of the threaded portions (2,3) is constant with varying overall length of the screw (1) and the length of the optionally threadless shank portion (4) varies.

4. A fastening according to any one of Claims 1 to 3, **characterised in that** the flank angle of the threaded portions (2,3) is approximately 40° and the thread pitch is at least approximately 3 mm.

5. A fastening according to any one of Claims 1 to 4, **characterised in that** the diameter (DS) of the threadless shank portion (4) is reduced from the original wire material to the root diameter (DK) of the threaded portions (2,3).

6. A fastening according to any one of Claims 1 to 5, **characterised in that** the zones of the threaded portions (2,3) of the shank are swaged, before the screw-thread is produced, to a diameter which is larger than the original wire material so that, after the thread rolling, the root diameter (DK) of the threaded portions (2,3) corresponds once more to the diameter (DS) of the threadless shank portion (4).

7. A fastening according to Claim 1 and any one of the preceding Claims, **characterised in that** the length of the threaded portions (2,3) and the length of the threadless shank portion (4) correspond approximately in each case to one third of the overall length of the screw (1).

## Revendications

1. Fixation de lattes de bois sur le platelage d'un toit ou la fondation d'un mur composé entre autre de bois, à l'aide d'une vis comportant une tige pourvue au moins partiellement d'un filet, une pointe de perçage et/ou d'enfoncement (6) et une tête (5) équipée d'une prise pour un outil, une section filetée (2, 3) étant prévue, au niveau de la tige de la vis (1), de façon à être respectivement rattachée au moins à la pointe de perçage et/ou d'enfoncement (6) et à la tête (5), et ces deux sections filetées (2, 3) présentant un diamètre extérieur (DA) identique,
**caractérisée en ce que**
les lattes de bois sont fixées de façon étroitement serrée sur le platelage de toit ou la fondation de mur composé de bois, la section filetée (3) rattachée à la tête (5) présente un pas (S3) inférieur au pas (S2) de la section filetée rattachée à la pointe de perçage et/ou d'enfoncement (6), et la tête (5) est configurée de façon à être petite et intégrable dans l'alésage, le diamètre extérieur de la tête (5) étant identique ou légèrement supérieur au diamètre extérieur (DA) des sections filetées (2, 3).

2. Fixation selon la revendication 1,
**caractérisée en ce que**
les deux sections filetées (2, 3) présentent au moins approximativement la même longueur (L1, L2).

3. Fixation selon la revendication 1,
**caractérisée en ce que**
la longueur (L1, L2) des sections filetées (2, 3), pour une longueur totale variable de la vis (1), reste constante tandis que la longueur de la section de tige non filetée (4) peut varier le cas échéant.

4. Fixation selon l'une des revendications 1 à 3,
**caractérisée en ce que**
l'angle de filet des sections filetées (2, 3) est approximativement égal à 40° et le pas est égal à au moins 3 mm.

5. Fixation selon l'une des revendications 1 à 4,
**caractérisée en ce que**
le diamètre (DS) de la section de tige non filetée (4) du matériau filaire initial est réduite au diamètre à fond de filet (DK) des sections filetées (2, 3).

6. Fixation selon l'une des revendications 1 à 5,
**caractérisée en ce que**
les zones des sections filetées (2, 3) de la tige sont refoulées avant la fabrication du filet sur un diamètre plus grand par rapport au matériau filaire initial, de telle sorte que le diamètre à fond de filet (DK) des sections filetées (2, 3), après le filetage par roulage, correspond de nouveau au diamètre (DS) de la section de tige non filetée (4).

7. Fixation selon la revendication 1 et selon l'une des revendications précédentes,
**caractérisée en ce que**
la longueur des sections filetées (2, 3) et la longueur de la section de tige non filetée (4) correspondent respectivement à environ un tiers de la longueur totale de la vis (1).
